# EUROPÄISCHE PATENTSCHRIFT

(11) **EP 3 262 133 B1**
(45) Veröffentlichungstag und Bekanntmachung des Hinweises auf die Patenterteilung: **08.05.2019**
(21) Anmeldenummer: 16701059.4
(22) Anmeldetag: 20.01.2016
(51) Int. Cl.: C09K 3/12, F24D 3/00, C08L 3/08

(54) **FLÜSSIGDICHTMITTEL FÜR HEIZUNGSANLAGEN**
LIQUID SEALING AGENT FOR HEATING INSTALLATIONS
MOYEN D'ÉTANCHÉITÉ LIQUIDE POUR INSTALLATIONS DE CHAUFFAGE

(30) Priorität: 27.02.2015 DE 102015203599
(43) Veröffentlichungstag der Anmeldung: 03.01.2018
(73) Patentinhaber: BaCoGa Technik GmbH, 36323 Grebenau (DE)
(72) Erfinder: KLIEBOLDT, Wilhelm, 36323 Grebenau (DE)
(74) Vertreter: Knoop, Philipp
(86) Internationale Anmeldenummer: PCT/EP2016/051157
(87) Internationale Veröffentlichungsnummer: WO 2016/134890

(56) Entgegenhaltungen:
- EP-A1- 1 892 349
- WO-A1-2006/088335
- DE-A1- 4 342 861
- US-A- 2 264 388
- US-A- 4 973 360

## Beschreibung

Die Erfindung betrifft ein Flüssigdichtmittel für Heizungsanlagen zum dauernden Verbleib im Flüssigkeitskreislauf, die Verwendung des Flüssigdichtmittels zum elastischen Verschluss von Undichtigkeiten in Kunststoffen, Metallen, Presssystemen und Fußbodenheizungen und ein Verfahren zum Dichten von Heizungsanlagen.

Bekannt sind Dichtmittel für Wasserkreisläufe und insbesondere Heizungsanlagen auf der Basis von Wasserglas. Beispielsweise beschreibt die DE 43 42 861C2 ein solches Dichtmittel, dem auch Zellulosefasern zugefügt sind. Die bekannten Dichtmittel eignen sich vorzüglich für das Dichten kleinerer Lecks in den Wasserkreisläufen, wobei Wasserglas mit dem Luftsauerstoff reagiert und in der Folge auskristallisiert. Die Kristalle verschließen die kleineren Lecks vollkommen dicht. Die Dichtmittel auf Wasserglasbasis müssen nach dem Dichtvorgang wieder aus dem Flüssigkeitskreislauf entfernt werden. Sie eignen sich nicht besonders gut für größere Lecks und für den Verschluss von Undichtigkeiten in Kunststoffen, weil die Elastizität der Wasserglasverschlüsse hierfür nicht ausreicht.

Die US 2 264 388 A macht eine Hydroexyethylcellulose enthaltende Antileckagekühlflüssigkeit vorbekannt.

Aufgabe der Erfindung ist es, ein Flüssigdichtmittel für Heizungsanlagen anzugeben, welches zum Dichten von Lecks mit einem Flüssigkeitsverlust von bis zu 30 Liter am Tag geeignet ist.

Diese Aufgabe löst die Erfindung mit einem Flüssigkeitsdichtmittel für Heizungsanlagen, welches aus einem Gemisch von 7,2-10,7 Gew.% Cellulose-Kleister, 7,2-10,7 Gew.% Konservierungsmittel (auf der Basis von CMIT/MIT im Verhältnis 3:1), 0,95-1,4 Gew.% Cellulosefasern, 0,14-0,22 Gew. % Natronlauge 10% besteht, wobei der auf 100 Gew.% verbleibende Gewichtsanteil mit Wasser aufgefüllt ist. Mit diesem Flüssigdichtmittel ist ein elastischer, dauerhafter und alterungsbeständiger Verschluss größerer Leckstellen in Kunststoffen, Metallen, Presssystemen, Fußbodenheizungen und anderen Teilen von Heizungsanlagen möglich. Das Dichtmittel kann dauerhaft in dem System verbleiben und entwickelt dadurch eine Langzeitwirkung. Das erfindungsgemäße Dichtmittel ist mit Frostschutzmittel (Glycol, Sole) und mit Heizungswasser nach VDI 2035 verträglich und verursacht keine Schäden an Pumpen und Regelventilen.

Die Fließeigenschaften des Flüssigdichtmittels können noch verbessert werden, indem zusätzlich 0,1 bis 0,16 Gew.% Netzmittel zugegeben wird, bevor auf 100 Gew.% mit Wasser aufgefüllt wird.

Um die Anwesenheit des Flüssigdichtmittels im Flüssigkeitskreislauf leicht nachprüfbar zu gestalten, wird vorgeschlagen, dass zusätzlich 0,06-0,09 Gew.% Farbstoff zugegeben wird, bevor auf 100 Gew.% mit Wasser aufgefüllt wird.

In einer bevorzugten Ausführungsform enthält das erfindungsgemäße Flüssigdichtmittel etwa 80,53 Gew.% Wasser, etwa 8,95 Gew.% Cellulose-Kleister, etwa 8,95 Gew.% Konservierungsmittel auf der Basis von CMIT/MIT im Verhältnis 3:1, etwa 1,18 Gew.% Cellulosefasern, etwa 0,18 Gew.% Natronlauge 10%, etwa 0,13 Gew.% Netzmittel und etwa 0,08 Gew.% Farbstoff.

Der Aufbau eines Leckverschlusses an der Leckstelle wird durch den Anteil an Cellulosefasern erleichtert. Es werden natürliche Cellulosefaser (=Holzfasern) bevorzugt. Besonders gute Ergebnisse erhält man durch die Verwendung verschieden langer Cellulosefasern, wobei empfohlen wird, dass der Anteil der Cellulosefasern etwa zu 2/3 Gewichtsanteil aus langen Cellulosefasern mit Längen von ca. 0,6 mm und etwa zu 1/3 Gewichtsanteil aus kurzen Cellulosefasern mit Längen von ca. 0,2 mm besteht.

Gemäß der Erfindung eignet sich das beschriebene Flüssigkeitsdichtmittel zum elastischen Abdichten von Heizungsanlagen mit einem leckagebedingten Flüssigkeitsverlust unter 30 Litern pro Tag. Hierfür ist die Verwendung besonders zu empfehlen.

Beste Ergebnisse erhält man, wenn das Flüssigkeitsdichtmittel dauerhaft im Flüssigkeitskreislauf der Heizungsanlage verbleibt.

Aufgrund seiner hervorragenden Eigenschaften wird die Verwendung des erfindungsgemäßen Flüssigkeitsdichtmittels zum Abdichten von Leckagen in Kunststoffen, Metallen, Presssystemen und Fußbodenheizungen besonders empfohlen.

Ein erfindungsgemäßes Verfahren zum Abdichten von Leckagen in Heizungsanlagen mit einem Flüssigdichtmittel gemäß obiger Beschreibung umfasst die folgenden Verfahrensschritte:
- alle Mischventile und Heizkörperventile werden geöffnet, die Umwälzpumpen entlüftet und in Betrieb gelassen;
- das Heizungswasser wird soweit abgelassen, dass die erforderliche Menge von Flüssigdichtmittel in den Heizungskreislauf eingefüllt werden kann;
- das erfindungsgemäße Dichtmittel wird umgerührt oder geschüttelt und die für den Heizungskreislauf erforderliche Menge bereitgestellt und gemäß Gebrauchsanweisung verdünnt;
- das gebrauchsfertige Flüssigdichtmittel wird mittels einer Einfüllpumpe über den KFE-Hahn in den Flüssigkeitskreislauf der Heizungsanlage eingebracht;
- die Heizungsanlage bleibt 7 Stunden in Betrieb und wird dann abgestellt;
- wenn die Abdichtung je nach den vorhandenen Gegebenheiten nach einem oder mehreren Tagen abgeschlossen ist, kann die gedichtete Heizungsanlage wieder in Betrieb genommen werden.

Ein Ausführungsbeispiel der Erfindung wird nachfolgend näher erläutert.

Für den Ansatz einer üblichen Menge des erfindungsgemäßen Flüssigdichtmittels werden 306 kg Wasser bereitgestellt. In das Wasser werden 3,0 kg Cellulosefasern BWW 40 der Firma Rettenmeier und 1,5 kg Cellulosefasern BE 600 der Firma Rettenmeier, 34,0 kg Kleister Natrosol LR 250 der Firma Ashland, Rotterdam, 34,0 kg Konservierungsmittel Mergal K9N der Firma TROY Chemie GmbH, Hannover, 0,7 kg Natronlauge 10%, 0,5 kg Netzmittel Mersolat H der Firma LANXES Deutschland GmbH, Leverkusen, und 0,3 kg in Wasser gelöste Farbstoffe eingerührt. Dabei ergibt sich eine Gesamtmenge von 380 kg Flüssigdichtmittel.

Die Cellulosefasern der Firma Rettenmeier & Söhne GmbH und Co., KG, Rosenberg, werden unter der Marke ARBOCEL vertrieben. Es handelt sich hierbei um natürliche Cellulosefasern (=Holzfasern) aus 100% Cellulose mit einem pH-Wert von 5 - 7,5. Die Cellulosefasern erleichtern das Verstopfen der Leckstellen. Sie werden von dem Kleister zusammengehalten und mit den Rändern der Leckstelle verklebt.

Der Kleister wird unter der Marke Natrosol 250HR von der Firma Ashland, Rotterdam, vertrieben. Er besteht aus Hydroxyethylcellulose (HEC) und wird als Feingranulat geliefert. Er hat einen pH-Wert von 6,0 - 8,5. Der Kleister ist als Rheologiemodifikator (=Verdickungsmittel) beigemischt.

Das Konservierungsmittel dient zur Konservierung des Flüssigdichtmittels, welches ab dem Herstellungsdatum mindestens 5 Jahre lagerfähig ist. Empfohlen wird das unter der Marke Mergal K9N vertriebene Konservierungsmittel der Firma TROY Chemie GmbH, Hannover. Es hat einen pH-Wert von ca. 4,5. Aktivsubstanz ist CMIT/MIT im Verhältnis 3:1. Dabei handelt es sich um ein Gemisch aus 5-Chlor-2-Methyl-4-Isothiazol-3-on (EG Nr. 247-500-7) und 2-Methyl-2H-Isothiazol-3-on (EG Nr. 220-239-6) im Verhältnis 3:1.

Die 10%-ige Natronlauge dient zur Einstellung des pH-Wertes des fertigen Flüssigdichtmittels auf ca. 8,0. Empfohlen wird "Natronlauge 10%" (Natriumhydroxid in wässriger Lösung) der Firma Brenntag GmbH, Lohfelden.

Das Netzmittel dient zur Verbesserung der Fließeigenschaften, damit das Flüssigdichtmittel auch in kleinste Hohlräume eindringen kann. Empfohlen wird hier das unter der Marke Mersolat H von der Firma LANXESS Deutschland GmbH, Leverkusen, vertriebene Mittel, welches sulfochlorierte, verseifte Parafinöle enthält, nämlich sekundäre Alkansulfonate (SAS), vorwiegend Natriumalkansulfonate mit mittlerer Kettenlänge von 15 C-Atomen.

Die Farbe dient zur Kenntlichmachung des Vorhandenseins des Flüssigdichtmittels im Flüssigkeitskreislauf der Heizungsanlage.

Die zwei verschiedenen Sorten von Cellulosefasern wurden ausgewählt, weil sie verschiedene Faserlängen besitzen und eine Kombination aus zwei verschiedenen Faserlängen besonders gute Ergebnisse beim Abdichten zeigt.

1 Liter von dem so hergestellten Flüssigdichtmittel wird pro 100 Liter Heizungswasser in die Heizungsanlage eingefüllt. Eine Unterdosierung würde die Wirksamkeit vermindern.

Das erfindungsgemäße Dichtmittel kann in Heizungsanlagen, die mit Öl, Gaskesseln, Gasthermen oder Brennwertgeräten betrieben werden zum Dichten von größeren Leckagen bis zu einem Wasserverlust von 30 Litern täglich verwendet werden. Es ergibt einen elastischen Verschluss der Undichtigkeit, die in verschiedenen Materialien auftreten kann wie in Kunststoffen, Metallen, Presssystemen und Fußbodenheizungen. Die Abdichtung ist dann dauerhaft und alterungsbeständig.

Ein Verfahren zum Abdichten von Leckagen in Heizungsanlagen mit dem oben beschriebenen Flüssigdichtmittel wird folgendermaßen durchgeführt:
- alle Mischventile und Heizkörperventile werden geöffnet, die Umwälzpumpen entlüftet und in Betrieb gelassen;
- das Heizungswasser wird soweit abgelassen, dass die erforderliche Menge von Flüssigdichtmittel in den Heizungskreislauf eingefüllt werden kann;
- das erfindungsgemäße Dichtmittel wird umgerührt oder geschüttelt und die für den Heizungskreislauf erforderliche Menge bereitgestellt und gemäß Gebrauchsanweisung verdünnt;
- das gebrauchsfertige Flüssigdichtmittel wird mittels einer Einfüllpumpe über den KFE-Hahn in den Flüssigkeitskreislauf der Heizungsanlage eingebracht;
- die Heizungsanlage bleibt 7 Stunden in Betrieb und wird dann abgestellt;
- wenn die Abdichtung je nach den vorhandenen Gegebenheiten nach einem oder mehreren Tagen abgeschlossen ist, kann die gedichtete Heizungsanlage wieder in Betrieb genommen werden.

## Patentansprüche

1. Flüssigdichtmittel für Heizungsanlagen, bestehend aus einem Gemisch von 7,2-10,7 Gew.% Cellulose-Kleister, 7,2-10,7 Gew.% Konservierungsmittel, 0,95-1,4 Gew.% Cellulosefasern, 0,14-0,22 Gew.% Natronlauge 10%, wobei der auf 100 Gew.% verbleibende Gewichtsanteil mit Wasser aufgefüllt ist.

2. Flüssigdichtmittel nach Anspruch 1, **dadurch gekennzeichnet, dass** zusätzlich 0,1-0,16 Gew.% Netzmittel zugegeben wird, bevor auf 100 Gew.% mit Wasser aufgefüllt wird.

3. Flüssigdichtmittel nach Anspruch 1 oder 2, **dadurch gekennzeichnet, dass** zusätzlich 0,06-0,09 Gew.% Farbstoff zugegeben wird, bevor auf 100 Gew.% mit Wasser aufgefüllt wird.

4. Flüssigdichtmittel nach einem der vorhergehenden Ansprüche, **dadurch gekennzeichnet, dass** es etwa 80,53 Gew.% Wasser, etwa 8,95 Gew.% Cellulose-Kleister, etwa 8,95 Gew.% Konservierungsmittel, etwa 1,18 Gew.% Cellulosefasern, etwa 0,18 Gew.% Natronlauge 10%, etwa 0,13 Gew.% Netzmittel und etwa 0,08 Gew.% Farbstoff enthält.

5. Flüssigdichtmittel nach einem der vorhergehenden Ansprüche, **dadurch gekennzeichnet, dass** der Anteil der Cellulosefasern etwa zu 2/3 Gewichtsanteilen aus langen Cellulosefasern mit Längen von etwa 0,6 mm und etwa zu 1/3 Gewichtsanteil aus kurzen Cellulosefasern mit Längen von etwa 0,2 mm besteht.

6. Verwendung eines Flüssigdichtmittels nach einem der Ansprüche 1 bis 5 zum elastischen Abdichten von Heizungsanlagen mit einer leckagebedingten Flüssigkeitsverlust unter 30 Litern pro Tag.

7. Verwendung nach Anspruch 6, **dadurch gekennzeichnet, dass** das Flüssigdichtmittel dauerhaft im Flüssigkeitskreislauf der Heizungsanlage verbleibt.

8. Verwendung eines Flüssigdichtmittels nach einem der Ansprüche 1 bis 5, **dadurch gekennzeichnet, dass** das Flüssigdichtmittel zum Abdichten von Leckagen in Kunststoffen, Metallen, Presssystemen und Fußbodenheizungen verwendet wird.

9. Verfahren zum Abdichten von Leckagen im Heizungsanlagen, mit einem Flüssigdichtmittel nach einem der Ansprüche 1 bis 5, umfassend die folgenden Verfahrensschritte:
- alle Mischventile und Heizkörperventile werden geöffnet, die Umwälzpumpen entlüftet und in Betrieb gelassen;
- das Heizungswasser wird soweit abgelassen, dass die erforderliche Menge von Flüssigdichtmittel in den Heizungskreislauf eingefüllt werden kann;
- das erfindungsgemäße Dichtmittel wird umgerührt oder geschüttelt und die für den Heizungskreislauf erforderliche Menge bereitgestellt und gemäß Gebrauchsanweisung verdünnt;
- das gebrauchsfertige Flüssigdichtmittel wird mittels einer Einfüllpumpe in den Flüssigkeitskreislauf der Heizungsanlage eingebracht;
- die Heizungsanlage bleibt 7 Stunden in Betrieb und wird dann abgestellt;
- wenn die Abdichtung je nach den vorhandenen Gegebenheiten nach einem oder mehreren Tagen abgeschlossen ist, kann die gedichtete Heizungsanlage wieder in Betrieb genommen werden.

## Claims

1. A liquid sealing agent for heating installations, consisting of a mixture of 7.2-10.7 wt.% cellulose paste, 7.2-10.7 wt.% preservative, 0.95-1.4 wt.% cellulose fibres, 0.14-0.22 wt.% sodium hydroxide solution 10%, wherein the remaining weight proportion of up to 100 wt.% is filled up with water,

2. The liquid sealing agent of claim 1, **characterised in that** 0.1-0.16 wt.% of wetting agent is additionally added, before it is filled up to 100 wt.% with water.

3. The liquid sealing agent of claim 1 or 2, **characterised in that** 0.06-0.09 wt.% dye is additionally added before it is filled up to 100 wt.% with water.

4. The liquid sealing agent of any of the preceding claims, **characterised in that** it contains about 80.53 wt.% water, about 8.95 wt.% cellulose paste, about 8.95 wt.% preservative, about 1.18 wt.% cellulose fibres, about 0.18 wt.% sodium hydroxide solution 10%, about 0.13 wt.% wetting agent and about 0.08 wt.% dye.

5. The liquid sealing agent of any of the preceding claims, **characterised in that** the proportion of cellulose fibres is about 2/3 part by weight of long cellulose fibres with lengths of about 0.6 mm and about 1/3 part by weight of short cellulose fibres with lengths of about 0.2 mm.

6. Use of a liquid sealing agent of any of claims 1 to 5, for the elastic sealing of heating installations with a leakage-induced liquid loss of less than 30 litres per day.

7. The use of claim 6, **characterised in that** the liquid sealing agent remains permanently in the liquid circulation of the heating installation.

8. The use of a liquid sealing agent of any of claims 1 to 5, **characterised in that** the liquid sealing agent is used for sealing leaks in plastics, metals, pressing systems and floor heating systems.

9. A method for sealing leaks in heating installations with a liquid sealing agent of any of claims 1 to 5, comprising the following method steps:
- all mixing valves and radiator valves are opened, the circulation pumps are vented and allowed to operate;
- the heating water is drained to the extent that the required amount of liquid sealing agent can be filled into the heating circulation;
- the sealing agent of the invention is stirred or shaken and the amount required for the heating circulation is provided and diluted according to instructions for use;
- the ready-to-use liquid sealing agent is introduced by means of a filling pump via the boiler filling and drain valve into the liquid circulation of the heating installation;
- the heating installation remains in operation for 7 hours and is then shut down;
- when the sealing is completed after one or more days, depending on the circumstances, the sealed heating installation can then be put back into operation.

## Revendications

1. Moyen d'étanchéité liquide pour installations de chauffage, composé d'un mélange de 7,2-10,7 % en poids de colle de cellulose, 7,2-10,7 % en poids de conservateur, 0,95-1,4 % en poids de fibres de cellulose, 0,14-0,22 % en poids de soude caustique à 10 %, dans lequel la partie en poids restante sur 100 % en poids est complétée en eau.

2. Moyen d'étanchéité liquide selon la revendication 1, **caractérisé en ce qu'**en plus 0,1-0,16% en poids d'agent mouillant est ajouté, avant de compléter en eau sur 100 % en poids.

3. Moyen d'étanchéité liquide selon la revendication 1 ou 2, **caractérisé en ce qu'**en plus 0,06-0,09 % en poids de colorant est ajouté, avant de compléter en eau sur 100 % en poids.

4. Moyen d'étanchéité liquide selon l'une quelconque des revendications précédentes, **caractérisé en ce qu'**il contient environ 80,53 % en poids d'eau, environ 8,95 % en poids de colle de cellulose, environ 8,95 % en poids de conservateur, environ 1,18 % en poids de fibres de cellulose, environ 0,18 % en poids de soude caustique à 10 %, environ 0,13 % en poids d'agent mouillant et environ 0,08 % en poids de colorant.

5. Moyen d'étanchéité liquide selon l'une quelconque des revendications précédentes, **caractérisé en ce que** la partie de fibres de cellulose se compose d'environ 2/3 de parties en poids de longues fibres de cellulose avec des longueurs d'environ 0,6 mm et d'environ 1/3 de parties en poids de courtes fibres de cellulose avec des longueurs d'environ 0,2 mm.

6. Utilisation d'un moyen d'étanchéité liquide selon l'une quelconque des revendications 1 à 5 pour l'étanchéification élastique d'installations de chauffage avec une perte de fluide due à une fuite inférieure à 30 litres par jour.

7. Utilisation selon la revendication 6, **caractérisée en ce que** le moyen d'étanchéité liquide reste durablement dans le circuit de fluide de l'installation de chauffage.

8. Utilisation d'un moyen d'étanchéité liquide selon l'une quelconque des revendications 1 à 5, **caractérisée en ce que** le moyen d'étanchéité liquide est utilisé pour l'étanchéification de fuites dans des plastiques, métaux, systèmes de presse et chauffages au sol.

9. Procédé d'étanchéification de fuites dans des installations de chauffage, avec un moyen d'étanchéité liquide selon l'une quelconque des revendications 1 à 5, comprenant les étapes de procédé suivantes :
- toutes les vannes de mélange et tous les robinets de radiateur sont ouverts, les pompes de circulation sont purgées et laissées en service ;
- l'eau de chauffage est évacuée jusqu'à ce que la quantité nécessaire de moyen d'étanchéité liquide puisse être versée dans le circuit de chauffage ;
- le moyen d'étanchéité selon l'invention est remué ou agité et la quantité nécessaire pour le circuit de chauffage est fournie et diluée selon le mode d'emploi ;
- le moyen d'étanchéité liquide prêt à l'emploi est introduit dans le circuit de fluide de l'installation de chauffage au moyen d'une pompe de remplissage ;
- l'installation de chauffage reste 7 heures en service puis est arrêtée ;
- lorsque l'étanchéification est terminée en fonction des conditions présentes après un ou plusieurs jours, l'installation de chauffage étanchéifiée peut à nouveau être mise en service.
